Europäisches Patentamt

European Patent Office

Office européen des brevets

(19)

(11) Veröffentlichungsnummer: **0 252 291 B1**

(12)

# EUROPÄISCHE PATENTSCHRIFT

(45) Veröffentlichungstag der Patentschrift:
28.08.91 Patentblatt 91/35

(51) Int. Cl.$^5$: **B23Q 11/10, B23Q 1/16**

(21) Anmeldenummer: **87107988.5**

(22) Anmeldetag: **03.06.87**

(54) **Bearbeitungsmaschine mit einem Spindelkopf.**

(30) Priorität: **06.06.86 DE 3619071**

(43) Veröffentlichungstag der Anmeldung:
**13.01.88 Patentblatt 88/02**

(45) Bekanntmachung des Hinweises auf die
Patenterteilung:
**28.08.91 Patentblatt 91/35**

(84) Benannte Vertragsstaaten:
**AT CH DE FR GB IT LI SE**

(56) Entgegenhaltungen:
**DE-A- 3 411 647**
**DE-A- 3 423 060**
**DE-U- 8 430 433**

(73) Patentinhaber: **Gebr. Heller Maschinenfabrik**
**GmbH**
**Postfach 1428 Neuffener Strasse 54**
**W-7440 Nürtingen (DE)**

(72) Erfinder: **Die Erfinder haben auf Ihre Nennung**
**verzichtet**

(74) Vertreter: **Kohl, Karl-Heinz et al**
**Patentanwälte Dipl.-Ing. A.K. Jackisch-Kohl**
**Dipl.-Ing. K.H. Kohl Stuttgarter Strasse 115**
**W-7000 Stuttgart 30 (DE)**

**Beschreibung**

Die Erfindung betrifft eine Beargbeitungsmaschine mit einem Spindelkopf nach dem Oberbegriff des Anspruches 1.

Bei dieser bekannten Bearbeitungsmaschine (DE-OS 34 11 647) kann der Spindel kopf um 180° gegenüber dem Träger schwenken. Dadurch wird die Werkzeugspindel aus einer vertikalen in eine horizontale Lage gebracht. Während der Bearbeintung wird häufig Kühlmittel im Arbeitsbereich der Werkzeuge benötigt. Für die Bearbeitung von tiefen Bohrungen bzw. bei der Bearbeitung im Inneren von Gehäusen ist es von großem Vorteil, wenn das Kühlmittel durch das Innere des Werkzeuges bis in die Nähe der Werkzeugschneide geführt wird. Die Kühlmittelzuführung zum Werkzeug erfolgt dabei durch die Arbeitsspindel (DE-GM 84 30 433), als sogenannte innere Kühlmittelzuführung. Die bislang bekannten Ausführungen mit innerer Kühlmittelzuführung haben eine relativ große Baulänge und sind daher für Maschinen entsprechend dem Oberbegriff des Anspruches 1 nicht geeignet.

Der Erfindung liegt die Aufgabe zugrunde, die gattungsgemäße Bearbeitungsmaschine mit dem um 180° gegenüber einem Träger schwenkbaren Spindelkopf so auszubilden, daß das Kühlmittel in jeder Stellung der Werkzeugspindel in konstruktiv einfacher Weise und ohne wesentliche Vergrößerung des Spindelkopfes in den Arbeitsbereich des jeweiligen Werkzeuges geführt werden kann.

Diese Aufgabe wird bei der gattungsgemäßen Bearbeitungsmaschine erfindungsgemäß mit den kennzeichnenden Merkmalen des Anspruches 1 gelöst.

Bei der erfindungsgemäßen Bearbeitungsmaschine verläuft die Kühlmittelbohrung, wie an sich bekannt, durch die Zugstange, die in der Werkzeugspindel untergebracht ist. Die Kühlmittelbohrung in der Zugstange ist an die Leitung im Übergabekolben angeschlossen, über den die Zugstange durch den Lösekolben zum Auswechseln der Werkzeuge betätigt und axial verschoben wird. In jeder Stellung des Übergabekolbens ist der kritische Anschlußbereich zwischen der Kühlmittelbohrung in der Zugstange und der Leitung im Übergabekolben abgedichtet, so daß sichergestellt ist, daß kein Kühlmittel aus der Kühlmittelzuführung austreten kann. Der Übergabekolben kann darum unabhängig von der Kühlmittelzuführung zum Verschieben der Zugstange beim Auswechseln des Werkzeuges ohne Schwierigkeiten verschoben werden. Die Abdichtung im Anschlußbereich stellt sicher, daß auch während des Verschiebens des Übergabekolbens die Kühlmittelzuführung einwandfrei abgedichtet ist. Infolge dieser inneren Kühlmittelzuführung ist keine aufwendige Ausbildung des Spindelkopfes notwendig. Das Kühlmittel wird in jeder Arbeitsstellung der Werkzeugspindel zum Arbeitsbereich des Werkzeuges geführt. Infolge der erfindungsgemäßen Ausbildung ist es möglich, den zum Verschieben des Übergabekolbens vorgesehenen Antrieb nicht im Spindelkopf selbst unterzubringen, sondern ihn als Anbaueinheit am Schlitten vorzusehen. Dadurch hat der Spindelkopf eine äußerst kurze Bauweise, die sich vorteilhaft bei den ohnehin beengten Platzverhältnissen auswirkt.

Weitere Ausgestaltungen der Erfindung ergeben sich aus den abhängigen Ansprüchen.

Die Erfindung wird anhand eines in den Zeichnungen dargestellten Ausführungsbeispieles näher erläutert. Es zeigen

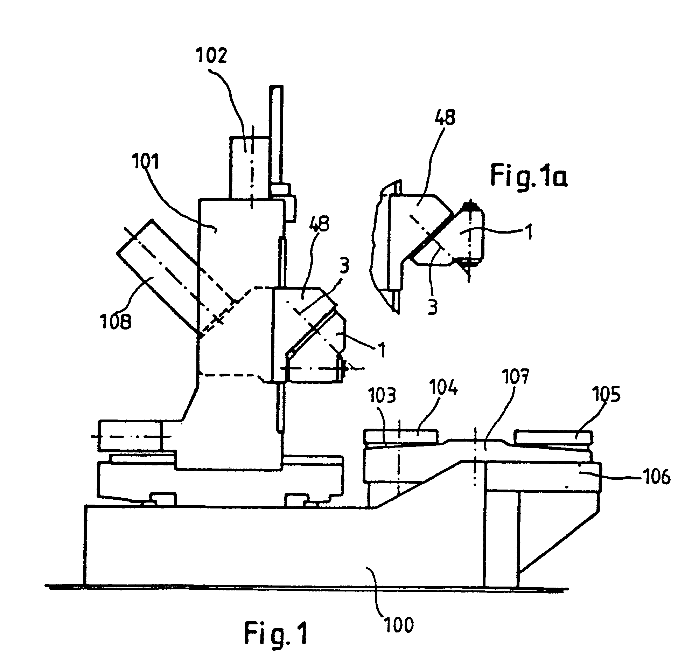

Fig. 1 in schematischer Darstellung eine erfindungsgemäße Bearbeitungsmaschine, deren Spindelkopf die horizontale Arbeitsstellung einnimmt,

Fig. 1 a den Spindelkopf gemäß Fig. 1 in der vertikalen Arbeitsstellung,

Fig. 2 einen Schnitt durch den Spindelkopf, der seine horizontale Arbeitsstellung einnimmt.

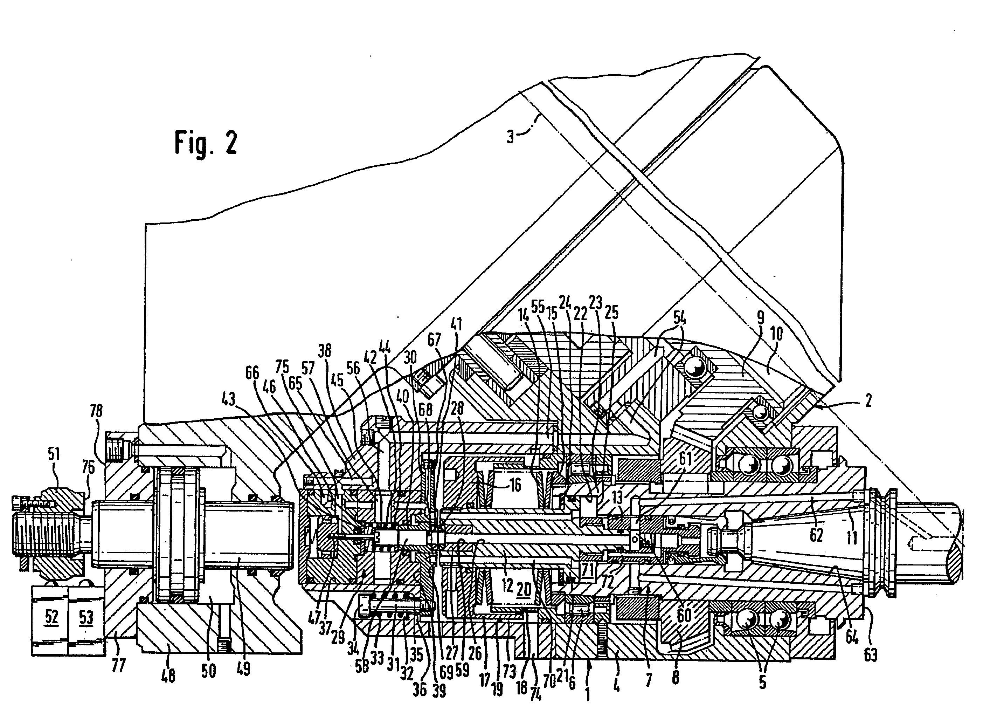

Die Bearbeitungsmaschine hat ein Maschinenbett 100, auf dem ein Maschinenständer 101 angeordnet ist. Am Maschinenständer 101 ist ein Schlitten 48 in Höhenrichtung verschiebbar gelagert. Der Schlitten 48 trägt einen Spindelkopf 1. Im Bereich vor dem Maschinenständer 101 befindet sich ein Drehtisch 103, auf dem eine Werkstückpalette 104 festgespannt ist. Auf dem Werkstückspannplatz 106 befindet sich eine weitere Werkstückpalette 105. Mit einer Palettenwechseleinrichtung 107 können die Werkstückpaletten 104,105 gegeneinander ausgetauscht werden. Die Achse 3 des Schlittens 48 liegt unter 45° zur Horizontalen. Der Spindelkopf 1 ist über das Traggehäuse 2 (Fig.2) in bekannter Weise aus der horizontalen Arbeitsstellung (Fig.1) in eine vertikale Arbeitsstellung (Fig.1a) verstellbar.

Der Spindelkopf 1 hat ein Gehäuse 4, in dem mit Lägern 5,6 eine Werkzeugspindel 7 drehbar gelagert ist. Auf ihr sitzt ein Kegelrad 8, das mit einem Kegelrad 9 im Traggehäuse 2 kämmt. Das Kegelrad 9 sitzt seinerseits auf einer Antriebswelle 10, die im Traggehäuse 2 untergebracht ist und in bekannter Weise von einem Antrieb 108 aus angetrieben wird. Die Werkzeugspindel 7 hat an ihrem freien Ende eine kegelförmige Werkzeugaufnahme 11.

In der Werkzeugspindel 7 ist axial verschiebbar und drehfest mit ihr verbunden eine Zugstange 12 gelagert, die mit einer Spannvorrichtung 13 verbunden ist, mit der ein in der Werkzeugaufnahme 11 sitzendes Werkzeug eingespannt werden kann. Die Zugstange 12 wird über einen Teil ihrer Länge von wenigstens einer Druckfeder, im Ausführungsbeispiel von einem Tellerfederpaket 14, umgeben, das an einer Schulter 15 der Werkzeugspindel 7 und an einem ringförmigen Widerlager 16 abgestützt ist, das drehfest auf der Zugstange 12 sitzt und axial fest mit ihr verbunden ist. Das Widerlager 16 sitzt an einem Ende der Zugstange 12 und hat einen koaxial zur Zugstange 12 liegenden Ring 17, der sich vom Widerlager aus in Richtung auf die Werkzeugaufnahme 11 erstreckt. Der Ring 17 umgibt mit geringem radialem Abstand eine Buchse 18, die an der Innenwandung 19 des Gehäuses 4 anliegt und axial gesichert ist. Der Ring 17, der außerdem mit radialem Abstand von der Innenwand 19 des Gehäuses 4 liegt, begrenzt zusammen mit der Buchse 18 einen ringförmigen Aufnahmeraum 20 für das Tellerfederpaket 14.

Die Zugstange 12 hat einen radial nach außen gerichteten Flansch 21, der an der Innenwand 22 eines im Innendurchmesser größeren Teiles 23 der Werkzeugspindel 7 anliegt. Der Flansch 21 liegt zwischen zwei Anschlägen 24 und 25, von denen der Anschlag 24 ein in der Innenwand 22 des Spindelteiles 23 sitzender Sprengring und der Anschlag 25 durch eine Schulterfläche am Übergang zum Spindelteil 23 gebildet wird.

Die Zugstange 12 hat eine zentrale Axialbohrung 26, die sie vollständig durchsetzt. In das von der Werkzeugaufnahme 11 abgewandte Ende der Zugstange 12 ist eine Buchse 27 dichtend eingesetzt, deren Stirnseite einen Dichtring 28 trägt, der vorzugsweise aus keramischem Material besteht. Die Buchse 27 mit dem Dichtring 28 ist drehfest mit der Zugstange 12 verbunden.

Der Zugstange 12 liegt mit geringem Abstand ein Übergabekolben 29 gegenüber, der axial verschiebbar im Spindelkopfgehäuse 4 untergebracht ist. Er hat nahe benachbart zur Zugstange 12 einen radial nach außen gerichteten Ringflansch 30, in den über seinen Umfang verteilt Gewindebolzen 31 geschraubt sind, die axial von ihm abstehen und in Bohrungen 32 des Spindelkopfgehäuses 4 ragen. Innerhalb der Bohrung 32 sind die Gewindebolzen 31 von Druckfedern 33 umgeben, die am Bolzenkopf 34 und am Boden 35 der Bohrungen 32 abgestützt sind. Der Durchmesser der Bohrungen 32 ist größer als der Bolzenkopfdurchmesser der Gewindebolzen. In den Boden 35 der Bohrungen 32 mündet eine im Durchmesser dem Schaftdurchmesser des Gewindebolzens 31 angepaßte Bohrung 36. Der Übergabekolben 29 kann gegen die Kraft der Druckfeder 33 gegen die Zugstange 12 verschoben werden. Hierbei wird sie an der Innenwandung 37 eines im Innendurchmesser verkleinerten Endabschnittes 38 des Spindelkopfgehäuses 4 geführt. In der in der Zeichnung dargestellten Ausgangsstellung liegt der Ringflansch 30 des Übergabekolbens 29 an einer radial verlaufenden Schulterfläche 39 des Spindelkopfgehäuses 4 an, welche die im Innendurchmesser kleinere zylindrische Innenwandung 37 mit der im Durchmesser größeren zylindrischen Innenwandung 19 des Spindelkopfgehäuses 4 verbindet. Im Übergabekolben 29 ist fluchtend zur Buchse 27 eine weitere Buchse 40 vorgesehen, die ebenfalls einen Dichtring 41 stirnseitig trägt. Die Buchse 40 steht unter der Kraft einer Druckfeder 42, die sich an einem Widerlager 43 des Übergabekolbens 29 und an einem radial nach außen gerichteten Flansch 44 eines Druckteiles 45 abstützt. Er ist in einer zentrischen Sacklochbohrung 46 des Übergabekolbens 29 untergebracht und liegt unter der Kraft der Druckfeder 42 an der vom Dichtring 41 abgewandten Stirnseite der Buchse 40 an und drückt dadurch den Dichtring 41 gegen den Dichtring 28 der in der Zugstange 12 untergebrachten Buchse 27. Die Druckfeder 42 umgibt den Druckteil 45, die in der Sacklochbohrung 46 untergebracht ist. Der Druckteil 45 sitzt auf einer Schraube 47, die in den Boden der Sacklochbohrung 46 geschraubt ist. Wird der Übergabekolben 29 zur Betätigung der Zugstange 12 axial verschoben, verschiebt sich die Schraube 47 relativ zum feststehenden Druckteil 45. Die Buchse 40 ist im Gegensatz zur Buchse 27 drehfest gelagert, so daß bei Betrieb des Spindelkopfes 1 der Dichtring 28 gegenüber dem an ihm anliegenden Dichtring 41 dreht.

Zur Betätigung des Übergabekolbens 29 dient ein in dem Schlitten 48 untergebrachter Lösekolben 49, der vorzugsweise hydraulish betätigt wird. Er ist in einem Zylinder 50 untergebracht. Auf dem vom Übergabekolben 29 abgewandten Ende sitzt auf dem Lösekolben 49 ein Einstellring 51, der auf den Lösekolben 49 geschraubt ist und der beim Betätigen des Lösekolbens mit zwei den Hub des Lösekolbens kontrollierenden Schaltern 52 und 53 zusammenwirkt. Mit dem Einstellring 51 kann der Hub des Lösekolbens 49 sehr genau und feinfühlig eingestellt werden.

Zur Zuführung von Kühl- und/oder Schmiermittel in den Arbeitsbereich des in die Werkzeugaufnahme 11 eingespannten Werkzeuges ist eine Kühlmittelzuführung vorgesehen. Die Zuführung von Kühlmittel und Preßluft erfolgt vom Traggehäuse 2 aus über eine Leitung 54, die in eine parallel zur Zugstange 12 verlaufende Leitung 55 im Spindelkopfgehäuse 4 mündet. Sie geht über eine radial verlaufende Zwischenleitung 56 im Bereich des Übergabekolbens 29 in eine radial verlaufende Anschlußleitung 57 im Übergabekolben 29 über, die in die Sacklochbohrung 46 mündet. Der Druckteil 45 ist so ausgebildet, daß über die Anschlußleitung 57 zuströmendes Kühlmittel bzw. Preßluft in die Durchgangsbohrung 58 der Buchse 40 gelangen kann. Die Durchgangsbohrung 58 liegt fluchtend zur Durchgangsbohrung 59 der Buchse 27. Der Übergangsbereich zwischen den beiden Buchsen 40 und 27 ist durch die aneinanderliegenden Dichtringe 41 und 28 abgedichtet. Die Durchgangsbohrung 59 bildet eine Fortsetzung der Bohrung 26 in der Zugstange 12. Die Bohrung 26 mündet an dem von der Buchse 27 abgewandten Ende in einen Verteilerraum 60, in den Zweigleitungen münden, von denen in der Zeichnung eine Zweigleitung 61 dargestellt ist. Die Zweigleitungen 61 durchsetzen die Spannvorrichtung 13 und schließen an Leitungen 62 an, die sich bis zur Stirnseite 63 der Werkzeugspindel 7 erstrecken. Aus den Leitungen 62 tritt das Kühl- bzw. Schmiermittel nach außen und gelangt durch das in der Werkzeugaufnahme 11 eingespannte Werkzeug in den Arbeitsbereich der Werkzeugschneiden.

In der (nicht dargestellten) Zuführeinrichtung für das Kühlmittel ist, wie an sich bekannt, eine Umschalteinrichtung vorgesehen, mit der wahlweise Kühlmittel oder Druckluft in die Kühlmittelzuführung geleitet werden kann. Die Druckluft wird durch die Leitungen 54 bis 57, 46, 58, 59, 12 und 60 bis 62 geblasen, wenn das Kühlmittel aus diesen Leitungen entfernt werden soll. Außerdem kann mit der Druckluft auch das bearbeitete Werkstück ausgeblasen werden. Die Kühlmittel- bzw. Druckluftzuführung verläuft zentral durch die Zugstange 12.

Hiervon völlig getrennt ist im Spindelkopf 1 auch eine Zuführung von Druckluft zum Ausblasen der Werkzeugaufnahme 11 vorgesehen. Mit dieser Druckluft wird beim Werkzeugwechsel die Werkzeugaufnahme 11 ausgeblasen, damit beim Werkzeugwechsel nicht Schmutzteilchen in die Aufnahme gelangen können. Um die Innenwandung 64 der Werkzeugaufnahme 11 sauber ausblasen zu können, wird die Druckluft zentral in die Werkzeugaufnahme 11 geblasen. Auch auf der Außenwandung des Schaftes des jeweiligen Werkzeuges befindliche Schmutzteilchen können hierdurch weggeblasen werden. Anstelle von Druckluft kann auch jedes andere geeignete Säuberungsmittel durch diese gesonderte Zuführung in die Werkzeugaufnahme 11 geblasen werden.

Die Druckluft wird ebenfalls vom Traggehäuse 2 aus einer im Spindelkopfgehäuse 4 verlaufenden Leitung 65 zugeführt. Im Übergabekolben 29 befindet sich eine mit der Leitung 65 in Verbindung zu bringende Anschlußleitung 66, die zunächst radial und anschließend axial bis in den Flansch 30 verläuft. In ihm sind eine oder mehrere radiale Bohrungen 67 vorgesehen, in die mit geringem radialen Abstand zur Buchse 40 Leitungsabschnitte 68 münden, die bis zu einer der Zugstange 12 zugewandten, axial vorstehenden Stirnseite 69 des Flansches 30 verlaufen. Fluchtend zu den Leitungsabschnitten 68 sind in der Zugstange 12 mit radialem Abstand zur zentralen Bohrung 26 im wesentlichen axial verlaufende Bohrungen 70 vorgesehen, die in einen Verteilerraum 71 münden, der zwischen dem Flansch 21 der Zugstange 12 und dem Anschlag 25 der Werkzeugspindel 7 vorgesehen ist. Vom Verteilerraum 71 aus erstrecken sich in der Spannvorrichtung 13 angeordnete, axial verlaufende Leitungen 72, die zentrisch in die Werkzeugaufnahme 11 münden.

Die Zeichnung zeigt den Spindelkopf in der Arbeitsstellung, in der in der Werkzeugaufnahme 11 ein Werkzeug eingespannt ist. In dieser Lage hat der Übergabekolben 29 axialen Abstand von der Zugstange 12. Er befindet sich in seiner axial zurückgezogenen Lage, so daß die Spannzangen der Spannvorrichtung 13 das Werkzeug fest in die Werkzeugaufnahme 11 ziehen. In der zurückgezogenen Stellung liegt der Übergabekolben 29 mit seinem Flansch 30 an der Schulterfläche 39 des Spindelkopfgehäuses 4 unter der Kraft der Druckfedern 33 an. Die Anschlußleitung 66 im Übergabekolben 29 liegt im Bereich neben der Leitung 65 im Spindelkopfgehäuse 4, so daß kein Säuberungsmittel, das im Ausführungsbeispiel vorzugsweise Druckluft ist, zur Werkzeugaufnahme 11 geblasen werden kann. Das Kühlmittel wird in der beschriebenen Weise über die zentrale Bohrung 26 des Spannzangenkolbens 12 zum Arbeitsbereich des Werkzeuges geführt. Soll das Werkzeug ausgewechselt werden, so wird bei sillstehender Werkzeugspindel 7 der Lösekolben 49 ausgefahre, der sich an den Übergabekolben 29 anlegt und ihn beim weiteren Hub gegen die Kraft der Druckdedern 33 axial verschiebt, bis sein Flansch 30 mit der Stirnseite 69 an der Zugstange 12 anschlägt. Beim weiteren Hub des Lösekolbens 49 wird dann die Zugstange 12 und die Spannvorrichtung 13 axial verschoben, wobei in bekannter Weise die Spannzangen der Spannvorrichtung das Werkzeug freigeben, das dann vorzugsweise automatisch aus der Werkzeugaufnahme 11 entnommen werden kann. Der Hub des Lösekolbens 49 wird beendet, sobald der Einstellring 51 mit seiner Planfläche 76 auf die Planfläche 78 des Zylinderdeckels 77 anschlägt. Der Übergabekolben 29 verschiebt sich relativ zum Druckteil 45 und zur Buchse 40, wobei die Druckfeder 46 gespannt und dadurch der Dichtring 41 fest gegen den Dichtring 28 gedrückt wird. In der axial verschobenen Endstellung des Übergabekolbens 29 hat die Anschlußleitung 66 Verbindung zur Leitung 65. Außerdem schließen die Leitungsabschnitte 68 an die Bohrungen 70 in der Zugstange 12 an. Dadurch kann das Säuberungsmittel über die Leitungen 65, 66, 67 68, 70, 71, 72 in die Werkzeugaufnahme 11 strömen. Durch das mit Druck austretende Säuberungsmittel wird das neu in die Werkzeugaufnahme 11 einzuwechselnde Werkzeug von Schmutz und Spänen vor dem Einführen abgeblasen. Die zuführung des Säuberungsmittels kann schon erfolgen, wenn das freigegebene Werkzeug aus der Werkzeugaufnahme 11 herausgezogen wird. Dadurch wird die Innenwandung 64 der Werkzeugaufnahme 11 sowie der Werkzeugschaft einwandfrei gesäubert. Selbstverständlich ist während des Auswechselvorganges die Kühlmittelzufuhr unterbrochen. Infolge der beschriebenen Ausbildung verlaufen die Leitungen zur Zuführung des Säuberungsmittels völlig getrennt von der Kühlmittelzuführung, so daß die beiden Medien nicht miteinander in Berührung kommen.

Ist das neue Werkzeug in die Aufnahme 11 eingesetzt, wird der Lösekolben 49 in umgekehrter Richtung beaufschlagt und in seine Ausgangslage zurückgefahren. Da die Zugstange 12 gegen die Kraft des Tellerfederpaketes 14 verschoben worden ist, drückt es nunmehr die Zugstange axial in ihre Ausgangslage zurück. Auch die Druckfedern 33 drücken den Übergabekolben 29 in Richtung auf seine in der Zeichnung dargestellte Ausgangslage zurück. Die Spannvorrichtung 13 wird axial zurückgeschoben, wobei die Spannzangen in bekannter Weise das neue Werkzeug in der Werkzeugaufnahme 11 einspannen. Sobald der Lösekolben 49 seine in der Zeichnung dargestellte Endlage erreicht hat, läuft der Einstellring 51 auf den Schalter 52 auf, welcher der Maschinensteuerung "Werkzeug gespannt" meldet. Nunmehr kann durch eine entsprechende Steuerung das Kühlmittel über die beschriebene Zuleitung in den Arbeitsbereich des Werkzeuges bei drehender Werkzeugspindel 7 zugeführt werden. In der dargestellten Arbeitsstellung sind alle stehenden Teile des Spindelkopfes 1 - abgesehen von dem stehenden Dichtring 41 der Buchse 40 - von der rotierenden Werkzeugspindel 7 getrennt. Mit dem Tellerfederpaket 14 wird das neue Werkzeug einwandfrei in der Werkzeugaufnahme 11 gespannt.

Sollte im Dichtbereich der beiden Dichtringe 28, 41 Leckage auftreten, dann ist dafür gesorgt, daß das durchtretende Kühlmittel nicht in den Bereich der Lager 6 der Werkzeugspindel 7 gelangt. Da der Ring 17 des Widerlagers 16 radialen Abstand von der Innenwandung 19 des Spindelkopfgehäuses 4 hat, wird ein Ringraum 73 zwischen dem Ring 17 und der Gehäuseinnenwandung 19 gebildet, durch den das Kühlmittel bis zu Auslaßbohrungen 74 strömen kann, aus denen das leckende Kühlmittel aus dem Spindelkopfgehäuse 4 strömen kann. Die Buchse 18 ist gegenüber der Innenwandung 19 des Spindelkopfgehäuses 4 abgedichtet.

Durch die Kühlmittelleitung kann, wie oben beschrieben, auch Druckluft zum Freiblasen der Kühlmittelleitung zugeführt werden, wenn die (nicht dargestellte) Zuführeinrichtung entsprechend geschaltet ist. Mit dem Kühlmittel wird auch eine Schmierung der Dichtringe 28 und 41 erreicht.

## Patentansprüche

1. Bearbeitungsmaschine mit einem Spindelkopf (1), der um 180° gegenüber einem Träger (48) schwenkbar ist und ein Gehäuse (4) aufweist, in dem eine Werkzeugspindel (7) drehbar gelagert ist, die durch die Schwenkbewegung aus einer vertikalen in eine horizontale Arbeitsstellung verstellbar ist und die eine Werkzeugaufnahme (11) sowie eine axial verschiebbare Zugstange (12) aufweist, mit der eine Spannvorrichtung (13) zum Einspannen von Werkzeugen in der Werkzeugaufnahme betätigbar ist, dadurch gekennzeichnet, daß durch die Zugstange (12) mindestens eine Kühlmittelbohrung (26) verläuft, die bis in den Arbeitsbereich des in der Werkzeugaufnahme (11) eingespannten Werkzeuges verläuft und an eine Leitung (57, 58) in einem im Spindelkopfgehäuse (4) verschiebbaren Übergabekolben (29) anschließt, daß der Anschlußbereich (27, 28, 40, 41) zwischen der Kühlmittelbohrung (26) und der Leitung (57, 58) in jeder Stellung des Übergabekolbens (29) abgedichtet ist, und daß die Leitung (57, 58) mit einer Kühlmittel-Zuführeinrichtung verbunden ist.

2. Bearbeitungsmaschine nach Anspruch 1, dadurch gekennzeichnet, daß der Übergabekolben (29) im Betrieb der Werkzeugspindel (7) Abstand von ihr hat und daß im Bereich zwischen dem Übergabekolben (29) und der Zugstange (12) die Kühlmittelbohrung (26) über wenigstens eine Dichtung (27,41) and die Leitung (57,58) im Übergabekolben (29) anschließt.

3. Bearbeitungsmaschine nach Anspruch 1 oder 2, dadurch gekennzeichnet, daß in die Zugstange (12) eine Buchse (27) eingesetzt ist, die stirnseitig einen Dichtring (28) trägt.

4. Bearbeitungsmaschine nach einem der Ansprüche 1 bis 3, dadurch gekennzeichnet, daß im Übergabekolben (29) eine Buchse (40) angeordnet ist, gegenüber der der Übergabekolben (29) vorzugsweise relativ verschiebbar ist und die stirnseitig einen Dichtring (41) trägt, der am Dichtring (28) der Zugstange (12) dichtend anliegt.

5. Bearbeitungsmaschine nach Anspruch 3 oder 4, dadurch gekennzeichnet, daß die Buchsen (27,40) mit ihren Bohrungen (58,59) eine Fortsetzung der Kühlmittelbohrung (26) der Zugstange (12) bilden.

6. Bearbeitungsmaschine nach Anspruch 4 oder 5, dadurch gekennzeichnet, daß die Buchse (40) des Übergabekolbens (29) unter Federkraft mit ihrem Dichtring (41) am Dichtring (28) der Buchse (27) der Zugstange (12) anliegt.

7. Bearbeitungsmaschine nach einem der Ansprüche 1 bis 6, dadurch gekennzeichnet, daß getrennt von der Kühlmittelzuführung im Übergabekolben (29) und in der Zugstange (12) wenigstens eine Zuführung (65 bis 68, 70 bis 72) für ein Säuberungsmittel vorgesehen ist, die in die Werkzeugaufnahme (11) mündet und bei Betrieb der Werkzeugspindel (7) vorzugsweise unterbrochen ist.

8. Bearbeitungsmaschine nach Anspruch 7, dadurch gekennzeichnet, daß die Säuberungsmittel-Zuführung (66 bis 68) im Übergabekolben (29) mindestens einen in dessen Stirnseite (69) mündenden Leitungsabschnitt (68) aufweist, der mit einer Leitung (70) in der Zugstange (12) fluchtet und bei Betrieb der Werkzeugspindel (7) Abstand von der Zugstange (12) hat.

9. Bearbeitungsmaschine nach Anspruch 7 oder 8, dadurch gekennzeichnet, daß im Spindelkopfgehäse (4) eine Säuberungsmittel-Anschlußleitung (65) vorgesehen ist, die bei axial vorgeschobenem Übergabekolben (29) zum Werkzeugwechsel an dessen Zuführung (66 bis 68) anschließt.

10. Bearbeitungsmaschine nach einem der Ansprüche 1 bis 9, dadurch gekennzeichnet, daß die Kühlmittelleitung (26, 55 bis 59) des Spindelkopfes (1) mit einer Kühlmittelleitung (54) im Träger (2) dauernd verbunden ist.

11. Bearbeitungsmaschine nach einem der Ansprüche 1 bis 10, dadurch gekennzeichnet, daß im Schlitten (48) für den Übergabekolben (29) ein Antrieb (49,50) vorgesehen ist, der vorzugsweise einen fluchtend zum Übergabekolben (29) liegenden Lösekolben (49) hat, mit dem der Übergabekolben (29) zum Auswechseln des Werkzeuges verschiebbar ist.

## Claims

1. Metal-working machine with a spindle head (1), which is able to tilt through 180° with respect to a support (48) and comprises a housing (4), in which a tool spindle (7) is mounted to rotate, which can be moved by the tilting movement from a vertical into a horizontal working position and which comprises a tool holder (11) as well as an axially displaceable draw rod (12), by which a chucking device (13) for clamping tools in the tool holder can be actuated, characterized in that extending through the draw rod (12) is at least one coolant bore (26), which extends into the working region of the tool clamped in the tool holder (11) and adjoins a pipe (57, 58) in a transfer piston (29) able to move in the spindle head housing (4), that the connecting region (27, 28, 40, 41) between the coolant bore (26) and the pipe (57, 58) is sealed in each position of the transfer piston (29) and that the pipe (57, 58) is connected to a coolant supply device.

2. Metal-working machine according to Claim 1, characterised in that during the operation of the tool spindle (7), the transfer piston (29) is at a distance therefrom and that in the region between the transfer piston (29) and the draw rod (12), by way of at least one gasket (27, 41), the coolant bore (26) adjoins the pipe (57, 58) in the transfer piston (29).

3. Metal-working machine according to Claim 1 or 2, characterised in that inserted in the draw rod (12) is a bush (27), which supports a sealing ring (28) on its end face.

4. Metal-working machine according to one of Claims 1 to 3, characterised in that located in the transfer piston (29) is a bush (40), with respect to which the transfer piston (29) is preferably able to move relatively and which on its end face supports a sealing ring (41), which bears in a sealing manner against the sealing ring (28) of the draw rod (12).

5. Metal-working machine according to Claim 3 or 4, characterised in that the bushes (27, 40) with their bores (58, 59) form a continuation of the coolant bore (26) of the draw rod (12).

6. Metal-working machine according to Claim 4 or 5, characterised in that the bush (40) of the transfer piston (29) bears under spring force by its sealing ring (41) against the sealing ring (28) of the bush (27) of the draw rod (12).

7. Metal-wording machine according to one of Claims 1 to 6, characterised in that separate from the coolant supply in the transfer piston (29) and in the draw rod (12), at least one supply (65 to 68, 70 to 72) for a cleaning agent is provided, which opens into the tool holder (11) and is preferably interrupted during the operation of the tool spindle (7).

8. Metal-working machine according to Claim 7, characterised in that the cleaning agent supply (66 to 68) in the transfer piston (29) comprises at least one pipe section (68) opening into its end face (69), which pipe section aligns with a pipe (70) in the draw rod (12) and during the operation of the tool spindle (7) is at a distance from the draw rod (12).

9. Metal-working machine according to Claim 7 or 8, characterised in that provided in the spindle head housing (4) is a cleaning agent connection pipe (65), which when the transfer piston (29) is advanced axially for changing the tool, adjoins its supply (66 to 68).

10. Metal-working machine according to one of Claims 1 to 9, characterised in that the coolant pipe (26, 55 to 59) of the spindle head (1) is permanently connected to a coolant pipe (54) in the spindle head support (2).

11. Metal-working machine according to one of Claims 1 to 10, characterised in that provided in the support (48) for the transfer piston (29) is a drive (49, 50), which preferably has a release piston (49), disposed in alignment with the transfer piston (29), by which the transfer piston (29) can be moved for changing the tool.

## Revendications

1. Machine d'usinage avec un nez de broche (1) qui peut être pivoté de 180° par ràpport à un support (48) et comporte un carter (4) dans lequel est montée de manière tournante une broche porte-outil (7) qui peut être amenée par le pivotement d'une position verticale à une position de travail horizontale et comprend un raccordement d'outil (11) ainsi qu'une barre de traction (12) déplaçable dans le sens axial au moyen de laquelle peut être actionné un dispositif de serrage (13) pour la fixation d'outils dans le raccordement d'outil, **caractérisée en ce** que la barre de traction (12) est traversée par au moins un alésage de réfrigérant (26) qui s'étend jusque dans la zone de travail de l'outil fixé dans le raccordement d'outil (11) et se raccorde à une conduite (57, 58) dans le piston de transfert (29) déplaçable dans le carter (4) du nez de broche; que la région du raccordement (27, 28, 40, 41) entre l'alésage de réfrigérant (26) et la conduite (57, 58) est rendue étanche dans n'importe quelle position du piston de transfert (29); et que la conduite (57, 58) communique avec un système d'amenée de réfrigérant.

2. Machine d'usinage selon la revendication 1, caractérisée en ce que, lors du fonctionnement de la broche porte-outil (7), le piston de transfert (29) se situe à distance de celle-ci; et que, dans la région entre le piston de transfert (29) et la barre de traction (12), l'alésage de réfrigérant (26) est raccordé par l'intermédiaire d'au moins un joint d'étanchéité (27, 41) à la conduite (57, 58) dans le piston de transfert (29).

3. Machine d'usinage selon l'une des revendications 1 ou 2, caractérisée en ce que dans la barre de traction (12) est insérée une douille (27) qui porte du côté frontal un joint d'étanchéité (28).

4. Machine d'usinage selon l'une des revendications 1 à 3, caractérisée en ce que dans le piston de transfert (29) est disposée une douille (40) par rapport à laquelle le piston de transfert (29) peut de préférence effectuer un déplacement relatif et qui porte du côté frontal un joint d'étanchéité (41) lequel est appliqué de manière étanche contre le joint d'étanchéité (28) de la barre de traction (12).

5. Machine d'usinage selon l'une des revendications 3 ou 4, caractérisée en ce que les douilles (27, 40) forment avec leurs alésages (58, 59) un prolongement de l'alésage de réfrigérant (26) de la barre de traction (12).

6. Machine d'usinage selon l'une des revendications 4 ou 5, caractérisée en ce que la douille (40) du piston de transfert (29) est appliquée avec son joint d'étanchéité (41), par la force d'un ressort, contre le joint d'étanchéité (28) de la douille (27) de la barre de traction (12).

7. Machine d'usinage selon l'une des revendications 1 à 6, caractérisée en ce qu'elle comprend, séparément de l'amenée de réfrigérant dans le piston de transfert (29) et dans la barre de traction (12), au moins une conduite d'amenée (65 à 68, 70 à 72) pour un produit à nettoyer qui débouche dans le raccordement d'outil (11) et qui est avantageusement interrompue lors du fonctionnement de la broche porte-outil (7).

8. Machine d'usinage selon la revendication 7, caractérisée en ce que la conduite d'amenée de produit à nettoyer (66 à 68) dans le piston de transfert (29) comporte au moins une section de conduite (68) qui débouche dans la face frontale (69) de celui-ci, s'aligne avec une conduite (70) dans la barre de traction (12) et se situe, lors du fonctionnement de la broche porte-outil (7), a distance de la barre de traction (12).

9. Machine d'usinage selon l'une des revendications 7 ou 8, caractérisée en ce que dans le carter (4) du nez de broche est prévue une conduite de raccordement de produit à nettoyer (65) qui, lorsque le piston de transfert (29) est déplacé vers l'avant dans le sens axial en vue du changement d'outil, se raccorde au système d'alimentation (66 à 68) de celui-ci.

10. Machine d'usinage selon l'une des revendications 1 à 9, caractérisée en ce que la conduite de réfrigérant (26, 55 à 59) du nez de broche (1) est en communication permanente avec une conduite de réfrigérant (54) dans le support (2) du nez de broche.

11. Machine d'usinage selon l'une des revendications 1 à 10, caractérisée en ce que le support (48) comprend pour le piston de transfert (29) un mécanisme d'entraînement (49, 50) qui est équipé d'un piston de desserrage (49) qui est de préférence aligné avec le piston de transfert (29) et par lequel le piston de transfert (29) peut être déplacé pour le changement d'outil.

Fig.1a

Fig. 1

Fig. 2

EP 0 252 291 B1